# NOUVEAU FASCICULE DE BREVET EUROPEEN

(11) **EP 0 478 396 B2**
(45) Date de publication et mention de la décision concernant l'opposition: **12.09.2001**
(45) Mention de la délivrance du brevet: 22.06.1994
(21) Numéro de dépôt: 91402133.2
(22) Date de dépôt: 30.07.1991
(51) Int. Cl.: B60T 13/52, B60T 13/68

(54) **Servomoteur à dépression**
Unterdruckservomotor
Vacuum servo booster

(30) Priorité: 28.09.1990 FR 9012016
(43) Date de publication de la demande: 01.04.1992
(73) Titulaire: Bosch Systemes de Freinage, 93700 Drancy (FR)
(72) Inventeur: Levrai, Roland, Bendix Europe Service Techniques, F-93700 Drancy (FR); Castel, Philippe, Bendix Europe Service Techniques, F-93700 Drancy (FR)
(74) Mandataire: Bentz, Jean-Paul

(56) Documents cités:
- EP-B- 0 140 187
- DE-A- 3 245 616
- DE-A- 3 625 815
- DE-C- 3 143 792
- US-A- 3 795 426
- US-A- 3 800 666
- US-A- 4 608 825

## Description

La présente invention concerne les servomoteurs du type à dépression destinés notamment à assurer l'assistance au freinage des véhicules automobiles.

Ces servomoteurs fonctionnent parfaitement bien et sont connus de l'homme du métier depuis longtemps. Un tel servomoteur est, par exemple, décrit dans EP-A-0 158 552. On ne reprendra donc pas ici la description complète d'un tel servomoteur ni celle de son fonctionnement

Un tel servomoteur comprend un boîtier divisé intérieurement en une chambre à dépression et une chambre de travail par un piston incorporant un moyen de valve comportant un clapet double déterminant au repos une communication entre les deux chambres qui sont alors isolées de l'environnement et, au travail, une isolation de la chambre à dépression et une communication entre la chambre de travail et l'environnement à pression atmosphérique. Le moyen de valve est normalement commandé au moyen d'une tige d'actionnement faisant saillie du boîtier.

Du fait de la sophistication de certains systèmes, il peut être souhaitable de commander le moyen de valve indépendamment de la tige d'actionnement. Notamment, dans l'application à l'assistance au freinage des véhicules, il peut être souhaitable d'assurer un freinage automatique indépendamment de la volonté du conducteur, par exemple, pour assurer le freinage d'une roue tendant à patiner, ou en réponse à la détection d'un obstacle par un moyen quelconque de type radar embarqué.

De US-A-4 608 825, on connaît un arrangement de freinage pour appliquer automatiquement les freins lorsque le conducteur quitte le siège du véhicule. La tige d'actionnement présente un passage déterminant un siège de valve pour assurer une communication avec l'atmosphère commandée par un moyen de valve électro-magnétique. Toutefois, ce système de freinage requiert de nombreuses modifications à apporter au système d'assistance.

Un servomoteur correspondant au préambule de la revendication 1 est connu du JP-A- 57-171083. Un servomoteur selon l'invention est décrit dans la revendication 1.

L'invention sera mieux comprise et d'autres buts, avantages et caractéristiques de celle-ci apparaîtront plus clairement à la lecture de la description qui suit de modes de réalisation donnés à titre non limitatif et à laquelle une planche de dessins est jointe sur laquelle :

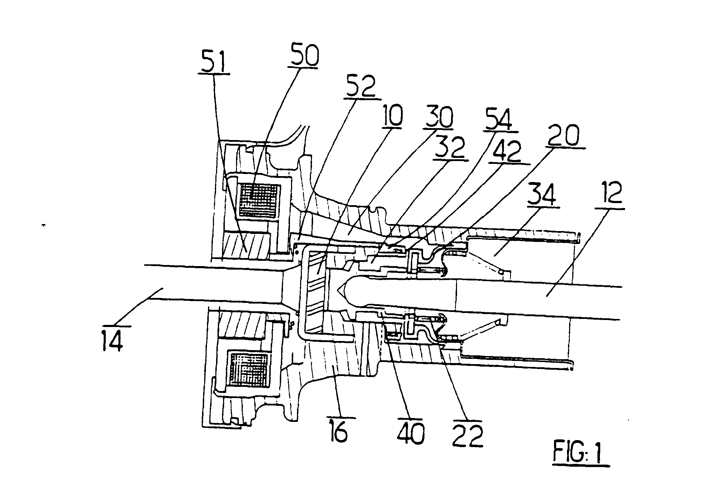

- La Figure 1 représente schématiquement en coupe le mode préféré de réalisation de l'invention.

En référence maintenant à cette figure, l'homme du métier reconnaîtra aisément le disque de réaction 10 disposé entre la tige d'actionnement 12 et la tige de poussée 14 dans le moyeu 16 du piston. Le moyen de valve est constitué par un clapet double 20 en matériau élastique pourvu de son ressort de poussée 22.

Sur la Figure, le servomoteur a été représenté au repos. Ainsi, dans cette position, le moyen de valve assure une communication entre les deux chambres de travail et l'isolement de l'ensemble par rapport à l'environnement. Dans ce but, le conduit 30 est relié à la chambre à dépression dans laquelle un vide suffisant est fait en permanence, tandis que le conduit 32 est relié à la chambre de travail à pression variable puisqu'elle est susceptible d'être reliée à l'extérieur et de recevoir la pression atmosphérique régnant à la zone arrière 34 du servomoteur, la différence des pressions régnant dans les deux chambres constituant le moteur du piston.

Au repos donc, le clapet double 20 ferme la communication entre la zone arrière 34 et le conduit 32 en reposant sur un siège 40, tandis qu'en travail, le clapet 20 ferme d'abord la communication entre les conduits 30 et 32 en prenant appui sur le siège 42, puis ouvre la communication entre la zone arrière 34 et le conduit 32 du fait du déplacement du siège 40 par rapport au siège 42.

Une bobine d'électro-aimant 50 est disposée de manière fixe par rapport au piston et agit sur un manchon 51 en fer doux pour déplacer une couronne formant l'un des sièges du clapet 20 à l'aide d'un poussoir 52 par exemple en acier amagnétique.

Dans l'exemple illustré Figure 1, la couronne 54 constitue elle-même le siège 42 disposé entre les conduits 30 et 32. Le poussoir 52 est préférablement digité comme représenté. Ainsi, lorsqu'un courant est appliqué à l'électro-aimant, le manchon 51 agit sur le poussoir 52, lequel se meut à l'encontre d'un ressort de rappel (non représenté Figure 1) et déplace la couronne 54 pour venir isoler les deux chambres en fermant la communication entre les conduits 30, 32.

Un déplacement supplémentaire de la couronne 54 maintenant à l'encontre ajoutée du ressort 22 de clapet, déplace le clapet et ouvre la communication entre le conduit 32 et la zone arrière 34. Une différence de pressions s'établit donc entre les deux chambres et le piston devient moteur.

L'homme du métier aura compris que le mouvement de la couronne 54, 54' peut être, de façon favorable, limité au moyen de butées, et un joint d'isolation sera disposé de manière appropriée pour éviter toute fuite.

Il est évident que l'homme de l'art pourra apporter de nombreuses modifications à l'invention sans pour autant sortir du cadre de l'invention tel que défini par les revendications annexées.

## Revendications

1. Servomoteur du type à dépression comprenant un boîtier divisé intérieurement en une chambre à dépression et une chambre de travail par un piston comprenant un moyeu (16) incorporant un moyen de valve comportant un clapet double (20) déterminant au repos une communication entre les deux chambres qui sont alors isolées de l'environnement et, au travail, une isolation de la chambre à dépression et une communication entre la chambre de travail et l'environnement à pression atmosphérique, le dit moyen de valve étant normalement commandé au moyen d'une tige d'actionnement (12) faisant saillie du dit boîtier, un moyen électromécanique (50, 52, 54) de commande du dit moyen de valve indépendant de la dite tige d'actionnement (12) et constitué par un électroaimant (50) disposé de manière fixe par rapport au piston, l'électroaimant (50) étant susceptible de mouvoir, lorsque le servomoteur est en position de repos, une couronne (54, 54') formant un (42, 40) des sièges du clapet double (20) pour ouvrir une communication entre un conduit (32) relié à la chambre de travail et une zone (34) où règne la pression atmosphérique, **caractérisé en ce que** le dit électroaimant (50) agit sur la dite couronne (54, 54') par l'intermédiaire d'un manchon (51) en fer doux, l'action du dit manchon (51) étant transmise à la dite couronne (54, 54') par l'intermédiaire d'un poussoir (52) et en ce qu'un disque de réaction (10) est disposé entre la tige d'actionnement (12) et une tige de poussée (14) dans le

2. Servomoteur selon la revendication 1 **caractérisé en ce que** le dit siège (42) est celui sur lequel le clapet (20) vient en appui au travail.

3. Servomoteur selon la revendication 1 **caractérisé en ce que** le dit poussoir (52) est digité.

## Patentansprüche

1. Servomotor des Typs mit Unterdruck, der ein Gehäuse aufweist, das im Inneren durch einen Kolben, der eine Nabe (16) aufweist, in eine Unterdruckkammer und eine Arbeitskammer unterteilt ist, wobei der Kolben ein Ventilmittel mit einer Doppelklappe (20) umfaßt, die in der Ruhestellung eine Verbindung zwischen den beiden Kammern herbeiführt, die dann von der Umgebung isoliert sind, sowie in der Arbeitsstellung eine Isolierung der Unterdruckkammer und eine Verbindung zwischen der Arbeitskammer und der Umgebung auf Atmosphärendruck herbeiführt, wobei das Ventilmittel normalerweise mittels einer Betätigungsstange (12) gesteuert wird, die aus dem Gehäuse herausragt, und der Servomotor zudem ein elektromechanisches Steuermittel (50, 52, 54) für das Ventilmittel aufweist, das unabhängig von der Betätigungsstange (12) ist und durch einen Elektromagneten (50) gebildet ist, der fest in bezug auf den Kolben angeordnet ist, wobei der Elektromagnet (50), wenn sich der Servomotor in einer Ruhestellung befindet, einen Kranz (54, 54') bewegen kann, der einen (42, 40) der Sitze der Doppelklappe (20) bildet, um eine Verbindung zwischen einem Kanal (32), der mit der Arbeitskammer verbunden ist, und einer Zone (34), wo Atmosphärendruck herrscht, herbeizuführen, **dadurch gekennzeichnet, daß** der Elektromagnet (50) über eine Hülse (51) aus Weicheisen wirkt, wobei die Wirkung der Hülse (51) über einen Stößel (52) auf den Kranz (54, 54') übertragen wird, und daß eine Reaktionsscheibe (10) zwischen der Betätigungsstange (12) und einer Schubstange (14) in der Nabe (16) angeordnet ist.

2. Servomotor nach Anspruch 1, **dadurch gekennzeichnet, daß** der Sitz (42) derjenige ist, an dem die Klappe (20) in der Arbeitsstellung in Anlage gelangt.

3. Servomotor nach Anspruch 1, **dadurch gekennzeichnet, daß** der Stößel (52) fingerförmig ist.

## Claims

1. Vacuum-type booster comprising a case divided internally into a vacuum chamber and a working chamber by a piston comprising a hub (16) incorporating a valve means possessing a double valve (20) enabling, in the rest position, a communication between the two chambers which are then isolated from the environment and, in the working position, an isolation of the vacuum chamber and a communication between the working chamber and the environment at atmospheric pressure, the said valve means being normally controlled by means of an actuating rod (12) extending out of the said case, an electromechanical means (50, 52, 54) for controlling the said valve means independent of the said actuating rod (12) and consisting of an electromagnet (50) arranged stationary with respect to the piston, the electromagnet (50) being able, when the booster is in the rest position, to move a ring (54, 54') forming one (42, 40) of the seats of the double valve (20), so as to open a communication between a passage (32) connected to the working chamber and a zone (34) in which atmospheric pressure prevails, **characterized in that** the said electromagnet (50) acts on the said ring (54, 54') via a soft iron sleeve (51), the action of the said sleeve (51) being transmitted to the said ring (54, 54') via a pushrod (52), and in that a reaction disc (10) is arranged between the actuating rod (12) and a pushrod (14) in the hub (16).

2. Booster according to Claim 1, **characterized in that** the said seat (42) is that on which the valve (20) comes to rest in the working position.

3. Servomotor according to Claim 1, **characterized in that** the said pushrod (52) is digitate.
